# EUROPEAN PATENT SPECIFICATION

(11) **EP 2 197 303 B1**
(45) Date of publication and mention of the grant of the patent: **15.02.2012**
(21) Application number: 08788489.6
(22) Date of filing: 29.08.2008
(51) Int. Cl.: A41D 27/24

(54) **A METHOD OF REINFORCING A SEAM**
NAHTVERSTÄRKUNGSVERFAHREN
PROCÉDÉ DE RENFORCEMENT D'UNE COUTURE

(30) Priority: 31.08.2007 GB 0716785; 31.08.2007 US 896338
(43) Date of publication of application: 23.06.2010
(73) Proprietor: Stretchline Intellectual Properties Limited, Road Town, Tortola (VG)
(72) Inventor: GLENN, Robert, Arthur, Loughborough, Leicestershire (GB)
(74) Representative: Marshall, Caroline
(86) International application number: PCT/GB2008/002944
(87) International publication number: WO 2009/027701

(56) References cited:
- EP-A- 1 293 137
- FR-A- 2 873 545
- GB-A- 2 046 171
- GB-A- 2 435 631
- US-A- 3 294 617
- US-A1- 2006 213 612

## Description

The invention relates to a method of reinforcing a seam particularly, but not exclusively, in shape-conforming garments or other textile articles produced from stretchable textile materials such as football shirts, swimwear, body suits and control briefs.

During the manufacture of garments and other textile articles it is often necessary to secure together the edges of two or more layers of textile material, which results in the formation of a seam between the layers of textile material.

In shape-conforming garments, such as undergarments and other close-fitting garments, it is becoming increasingly desirable to minimize the appearance of seams at the juncture between layers of textile material and thereby create a garment having a "seamless" appearance.

One method of creating a relatively discrete seam at the juncture between layers of textile material involves the use of an ultrasonic bonding assembly, which is suitable for creating a bond between layers of synthetic textile materials or textile materials containing thermoplastic yarns.

In an ultrasonic bonding assembly, two or more layers of suitable textile material are passed between a vibrating horn and an anvil, which often takes the form of a rotary drum made from hardened steel and machined to create a pattern of raised areas where bonding takes place. Typically a transducer containing piezoelectric crystals converts high frequency electrical signals to mechanical vibration, typically having a frequency of about 35 kHz, which is transmitted to the horn.

Friction that occurs through contact between the vibrating horn and the raised areas on the surface of the anvil, via the layers of textile material, results in the localized generation of heat. The heat that is generated softens the synthetic or thermoplastic fibres in the layers of textile material and, together with a compressive force applied by the horn against the anvil, results in the layers of textile materials becoming bonded to one another.

Such bonding is localized to the points at which the drum and anvil are brought into contact via the layers of textile material. In a seaming operation therefore the resultant bond may be created so as to minimize the bulk and therefore appearance of the seam.

As with other forms of creating a seam at the juncture between two or more layers of textile material, it is important that the seams created using an ultrasonic bonding assembly are able to withstand tensile loads during use. There is otherwise a risk the seams will fail when the layers of textile material are pulled away from each other. This is particularly important in shape-conforming garments or other textile garments produced from stretchable textile materials in which relatively significant loads may be applied to seams created at the junctures between layers of textile material.

Conventional methods of strengthening seams, using additional lines of stitching for example, result in the creation of bulky seam structures and are not therefore suitable for use in the manufacture of garments having a "seamless" appearance.

GB 2 046 171 A discloses a fabric elastomer composite including a relatively thin elastomer membrane having a stretchable fabric, e.g. of nylon, joined thereto. The composite is thin, lightweight, waterproof but vapour permeable, and stretchable at least by 50% in each direction. The fabric elastomer composite may be used to manufacture various garments such as athletic wear and thermal products, which are warm, waterproof and stretchable.

GB 2 046 171 A discloses various types of joint to assure watertight qualities. The joint may be a butt joint using a serpentine stitch, waterproofing being effected by a strip of the composite bonded, at room temperature, using a vulcanisable silicone elastomer, and a decorative strip being optionally present. The joint may alternatively be a tap joint in which two sheets are held together by stitching and the joint is preferably overlaid by an adhesive strip of the composite material.

According to a first aspect of the invention there is provided a method of reinforcing a seam in a garment or other textile article comprising the step of adhering a layer of substantially unidirectionally extensible elastic material along the length of the seam such that the said material straddles the seam and the direction of extensibility of the said material is generally aligned with the elongate direction of the seam.

This method results in a reinforced structure in which the seam is protected from loads that would otherwise have a tendency to pull apart the layers of textile material secured to other another along the seam whilst at the same time allowing the layers of textile material to stretch in the elongate direction of the seam.

The method also provides a means of reinforcing a seam without unnecessarily increasing the bulk of the seam itself. It is therefore particularly advantageous when used in garments or other textile articles in which it is desirable to minimize the appearance of seams.

As well as serving to maintain the integrity of the seam, the provision of a layer of material adhered along the length of the seam results, through an appropriate choice of material, in a structure that may be utilized to provide a decorative effect on an exterior surface of a garment or to improve comfort on an inner surface of a garment that is intended to be worn in direct contact with a wearer's skin by forming an intermediate layer between the seam and the wearer's skin.

The substantially unidirectionally extensible elastic material preferably comprises a strip of an elastic fabric containing lengthwise extending elastomeric yarns incorporated so as to permit extension of the strip in a lengthwise direction whilst resisting deformation of the strip in a widthwise direction when the strip is adhered along the length of the seam.

In particular, the elastic fabric may be a woven or knitted fabric containing elastomeric warp yarns and substantially non-extensible weft yarns so as to permit extension of the fabric in a warpwise direction and resist extension of the fabric in a weftwise direction when the strip is adhered along the length of the seam.

In order to ensure that the substantially unidirectionally extensible elastic material does not inhibit any stretch in an elongate direction, and thereby further minimize the appearance of a seam, the elastic material is preferably chosen such that it exhibits substantially the same recoverable extension as the seam in an elongate direction on the application of a tensile load.

In this regard, substantially the same recoverable extension is preferably 70-130%, more preferably 90-110%, most preferably 95-105% and especially 100% of the recoverable extension in the elongate direction on the application of a tensile load.

In preferred embodiments, the substantially unidirectionally extensible elastic material is adhered along the length of the seam using a hot melt adhesive, which may be applied directly to the surface of the elastic material in the form of a uniform pattern, or may be fed between the elastic material and the seam in the form of a continuous film.

A flat fusing press or heated rollers through which the elastic material and seam are fed may be used to melt the hot melt adhesive and thereby create the adhesive bond between the elastic material and the seam.

The use of a hot melt film such as, for example a hot melt polyurethane film, ensures that the elastic material is adhered over its entire surface to the seam and the textile material on either side of the seam.

In other embodiments where the substantially unidirectionally extensible elastic material is a woven or knitted fabric, the elastic fabric may be adhered along the length of the seam by means of fusible yarns, such as for example Grilon (RTM) yarns, woven or knit into the elastic fabric.

Again, in such embodiments, a flat fusing press or heated rollers through which the elastic material and seam are fed may be used to melt the fusible yarns and thereby create the adhesive bond between the elastic material and the seam.

It is also envisaged that in yet further embodiments, a pressure adhesive may be used to adhere the elastic material along the length of the seam. In such embodiments a flat press or rollers may be used to create the adhesive bond between the elastic material and the seam.

In order to produce a ruched effect along at least part of the length of the seam, the substantially unidirectionally extensible elastic material may be adhered under tension along the length of the seam.

According to a second aspect of the invention there is provided a method of producing a reinforced seam in a garment or other textile article comprising the steps of:
(a) securing the edges of two or more layers of textile material together to form a seam;
(b) adhering a layer of substantially unidirectionally extensible elastic material along the length of the seam such that the said material straddles the seam and the direction of extensibility of the said material is generally aligned with the elongate direction of the seam.

Preferably, in order to minimize the bulk of the seam, the method further comprises the steps of removing excess textile material following formation of the seam and laying the seam flat prior to adherence of the substantially unidirectionally extensible elastic material along the length of the seam.

As will be appreciated by those skilled in the art, the edges of the two or more layers of textile material may be secured together by means of stitching, ultrasonic bonding, adhesive bonding or a combination of one or more such methods.

In embodiments where the layers of textile material contain synthetic or thermoplastic yarns and the edges of two or more such layers of textile material are secured together by means of ultrasonic bonding, the excess textile material may be performed simultaneously using ultrasonics. This arrangement not only improves the efficiency of the production of the seam, but leads to the creation of sealed edges along the seam, which are resistant to fraying and therefore improves the integrity of the seam while at the same time minimizing its bulk.

According to a third aspect of the invention there is provided a reinforced seam in a garment or other textile article comprising the edges of two or more layers of textile fabric secured together and a layer of substantially unidirectionally extensible elastic material adhered along the length of the seam such that the said material straddles the seam and the direction of extensibility of the said material is generally aligned with the elongate direction of the seam.

Other advantageous features of the invention are recited in the claims.

An embodiment of the invention will now be described, by way of a non-limiting example, with reference to the figures in which:
Figure 1 provides a schematic illustration of formation of a seam along a juncture between two layers of textile material during the production of a reinforced seam in accordance with an embodiment of the invention;
Figure 2 provides a schematic illustration of adherence of a strip of elastic fabric along the length of the seam during the production of the reinforced seam; and
Figure 3 provides a schematic illustration of a cross-sectional view of the reinforced seam.

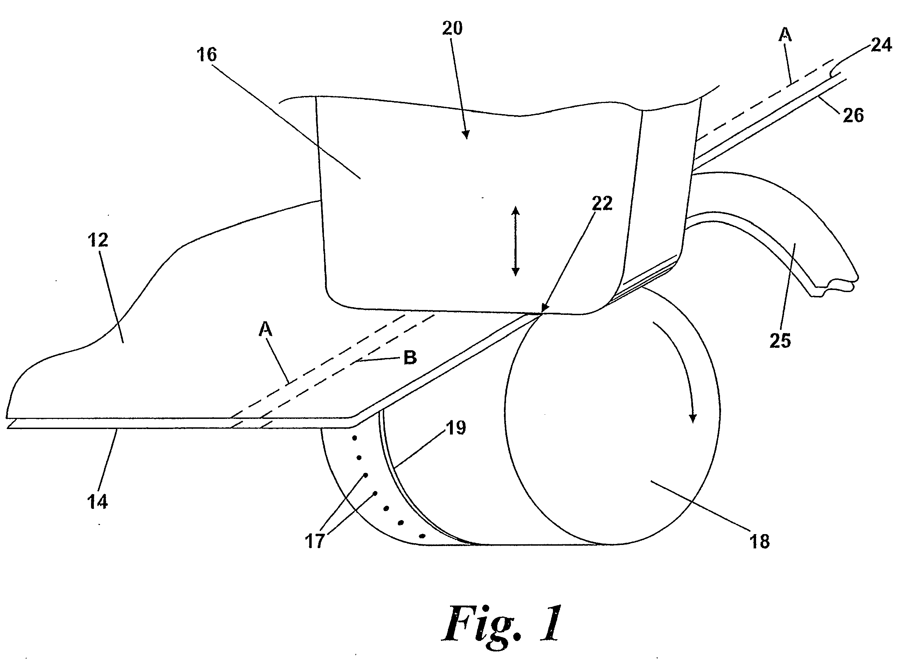

A method of producing a reinforced seam 10, in accordance with an embodiment of the invention, will be described with reference to Figures 1-3.

The formation of a seam 10 between two layers of synthetic textile fabric 12,14 is illustrated in Figure 1.

The layers of synthetic textile fabric 12,14 include synthetic yarns and are arranged initially in face to face contact such that edges thereof are aligned and can be passed between a nip 22 created between a horn 16 and anvil 18 of an ultrasonic bonding assembly 20. The anvil 18 is provided in the form of a rotary drum to draw the layers of synthetic textile fabric 12,14 through the nip 22.

During use of the ultrasonic bonding assembly 20 the horn 16 is driven to vibrate at a frequency of approximately 35 kHz thereby bringing the vibrating horn 16 into contact with raised areas 17 provided on the surface of the rotary drum, via the layers of synthetic textile fabric 12,14.

Friction resulting from the contact of the vibrating horn 16 against the raised areas 17 on the anvil 18 results in localized heating of the layers of synthetic fabric 12,14 as they are drawn through the nip 22. This results in the softening of the thermoplastic yarns in the layers of synthetic fabric 12,14 at the points of contact between the layers of fabric 12,14 and the raised areas 17.

The pattern of the raised areas 17 on the surface of the rotary drum forming the anvil 18 is chosen such that during passage of the layers of synthetic textile fabric 12,14 through the nip 22, thermoplastic yarns in the layers 12,14 are softened along a seam line A.

Compression of the layers 12,14 along the seam line A by virtue of the nip 22 created between the vibrating horn 16 and the anvil 18, followed by cooling of the heated thermoplastic yarns once the layers 12,14 pass through the ultrasonic bonding assembly 20, results in the formation of a bond between the layers 12,14 along the seam line A and thereby results in the formation of a seam 10.

The rotary drum is also formed to define a cutting edge 19 that contacts the vibrating horn 16 via the layers of synthetic textile fabric 12,14 as they are drawn through the nip 22. The cutting edge 19 is provided on the rotary drum so as to contact the vibrating horn 16 via the layers 12,14 along a cut line B and thereby simultaneously cut the layers 12,14 along the cut line B during the formation of the bond along the seam line A, which results in the removal of excess fabric 25 from the layers 12,14.

Friction created through contact of the cutting edge with the vibrating horn 16 creates localized heating of thermoplastic yarns along the cut line B in the layers of synthetic textile fabric 12,14, which results in the formation of fused edges 24,26 along the cut line B following removal of the excess fabric 25 from the layers 12,14.

In other embodiments it is envisaged that the layers of textile fabric 12,14 may be secured together to form a seam 10 through the use of a conventional sewing machine to create a line of stitching along seam line A, or through the use of hot melt adhesive in combination with a flat fuse press or heated rollers to adhere the layers 12,14 together along seam line A.

It is also envisaged that in other embodiments the excess fabric may be removed using a cutting assembly, in a separate step, following creation of the seam 10 along seam line A.

Following creation of the seam 10 along seam line A, and removal of excess fabric 25, the layers of textile fabric 12,14 are unfolded about the seam 10 so as to lay the seam 10 flat.

A layer of substantially unidirectionally extensible elastic material is then adhered along the length of the seam 10 such that the material straddles the seam 10 and the direction of extensibility of the material is generally aligned with the elongate direction C of the seam 10.

In the embodiment described with reference to Figures 1-3, the layer of substantially unidirectionally extensible elastic material is provided in the form of a strip 30 having a width W that is greater than the width w of the seam 10.

The strip 30 is preferably formed from a woven or knitted fabric containing elastomeric warp yarns and substantially non-extensible weft yarns that permit extension of the fabric in the warpwise direction and resist extension of the fabric in the weftwise direction.

The elastic fabric is preferably chosen such that the fabric exhibits substantially the same recoverable extension as the seam 10 in an elongate direction on the application of a tensile load.

In this regard, substantially the same recoverable extension is preferably 70-130%, more preferably 90-110%, most preferably 95-105% and especially 100% of the recoverable extension in the elongate direction on the application of a tensile load.

An elastic fabric that satisfies such parameters may be selected by applying a tensile load to the seam 10 to determine the resultant, recoverable extension in an elongate direction of the seam 30. An elastic fabric that demonstrates substantially the same recoverable extension in an elongate direction when the same tensile load is applied may then be selected.

In the embodiment described with reference to Figures 1-3, the strip 30 is adhered along the length of the seam 10 using a continuous film 32 of hot melt adhesive such as, for example, a hot melt polyurethane film.

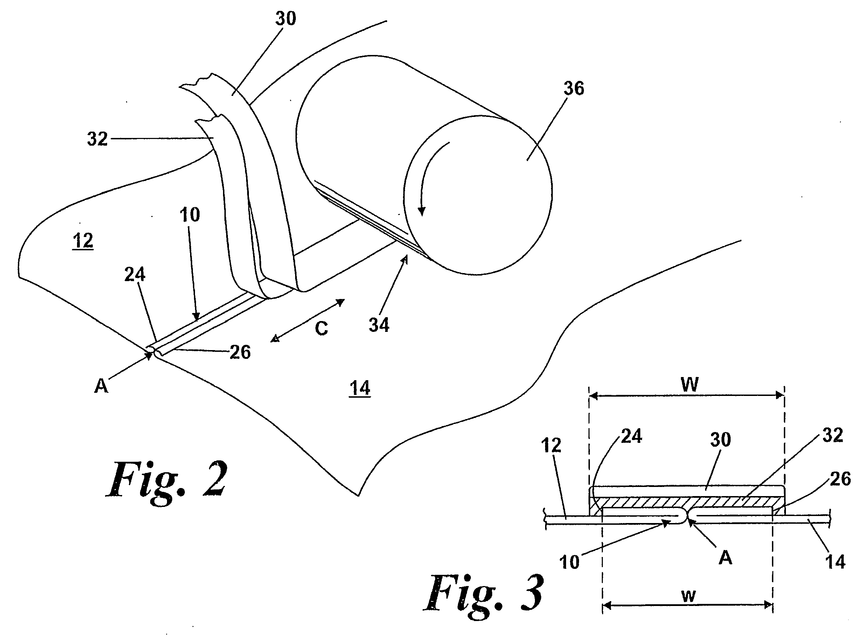

The film 32 of hot melt adhesive is fed between the strip 30 and the seam 10 as the strip 30 and the seam 10 are fed through a nip 34 created between a pair of heated rollers 36, only one of which is shown in Figure 2.

Preferably one or both of the heated rollers 36 is driven to rotate and thereby draw the sandwich of seam 10, film 32 and strip 30 through the nip 34, during which time the heated rollers 36 heat the film 32 through the strip 30 and the seam 10 and cause the film 32 to melt and adhere the strip 30 along the length of the seam 10.

In other embodiments it is envisaged that the film 32 of hot melt adhesive may be replaced by hot melt adhesive provided directly onto the surface of the strip 30 intended to be adhered along the length of the seam 10, thereby avoiding the need to feed the film 32 between the seam 10 and the strip 30 during their passage through the nip 34 between the heated rollers 36.

In further embodiments it is envisaged that the strip 30 and seam 10, together with hot melt adhesive in the form of a film 32 or provided on the surface of the strip 30, may be located within a flat fuse press to heat and melt the hot melt adhesive and thereby produce the required bond between the strip 30 and the seam 10.

In yet further embodiments it is envisaged that the strip 30 may be adhered along the length of the seam 10 by means of fusible yarns, such as for example Grilon (RTM) yarns, woven or knit into the strip 30. In such embodiments a flat fusing press or heated rollers may be used to melt the fusible yarns and thereby create the adhesive bond between the strip 30 and the seam 10.

In yet further embodiments it is envisaged that a pressure adhesive may be provided between the strip 30 and the seam 10, either provided directly onto the surface of the strip 30 or in the form of a continuous film 32 located between the strip 30 and the seam 10, to adhere the strip 30 along the length of the seam 10. Again in such embodiments a flat press or rollers may be used to create the adhesive bond between the elastic material and the seam.

The width W of the strip 30 and the width w of the seam 10 is such that following adherence of the strip 30 along the length of the seam 10, the strip 30 is adhered to the layers of textile fabric 12,14 on each side of the seam 10 (Figure 3).

The inextensibility of the strip 30 in a widthwise direction results in a structure in which the seam 10 is protected from loads that would otherwise have a tendency to pull apart the layers of textile material 12,14 along the seam 10.

The extensibility of the strip 30 in the lengthwise direction however permits the strip 30 to stretch with the layers of textile material 12,14 when they are stretched in the elongate direction C of the seam 10. In embodiments where the strip 30 is formed from an elastic fabric that exhibits substantially the same recoverable extension as the seam 10 in an elongate direction on the application of a tensile load, the effect of the strip 30 on the stretch of the seam 10 in an elongate direction is therefore negligible.

Depending on the material chosen to form the strip 30, the strip 30 may provide a decorative effect along the seam 10 for location on an outer surface of a garment or other textile article, or may improve comfort on an inner surface of a garment that is intended to be worn in direct contact with a wearer's skin by forming an intermediate layer between the seam 10 and the wearer's skin.

It is envisaged that the method of the invention may be used to create a curved seam. In such embodiments, the width W of the strip 30 to be adhered along the length of the seam 10 is preferably chosen so as to be only marginally greater than the width w of the seam 10. While this arrangement results in minimal contact area between the strip 30 and the layers of textile fabric 12,14 on each side of the seam 10, it assists in minimizing the effect of the strip 30 on the stretch of the textile fabric 12,14 along the seam 10.

In yet further embodiments it is envisaged that the strip 30 may be adhered under tension along at least part of the length of the seam 10. On release of the tension in the strip 30, this would result in a ruched effect along the length of at least part of the seam 10.

## Claims

1. A method of reinforcing a seam (10) in a garment or other textile article comprising the step of adhering a layer of substantially unidirectionally extensible elastic material along the length of the seam (10) such that the said material straddles the seam (10) and the direction of extensibility of the said material is generally aligned with the elongate direction of the seam (10).

2. A method of producing a reinforced seam in a garment or other textile article comprising the steps of:
(a) securing the edges of two or more layers of textile material (12,14) together to form a seam (10); and
(b) reinforcing the seam (10) according to the method claimed in Claim 1.

3. A method of producing a reinforced seam according to Claim 2 further comprising the steps of removing excess textile material (25) following formation of the seam (10) and laying the seam (10) flat prior to adherence of said material along the length of the seam (10).

4. A method of producing a reinforced seam according to Claim 2 or Claim 3 wherein the edges of said two or more layers of textile material (12,14) are secured together by means of one or more of stitching, ultrasonic bonding and adhesive bonding.

5. A method of producing a reinforced seam according to Claims 3 and 4 wherein said two or more layers of textile material (12,14) contain synthetic fibres and the steps of securing the edges of said two or more layers of textile material (12,14) to form a seam (10) and removing excess textile material (25) are performed simultaneously using ultrasonics.

6. A method according to any of Claims 1-5 wherein the said material comprises a strip (30) of an elastic fabric containing lengthwise extending elastomeric yarns incorporated so as to permit extension of the said strip (30) in a lengthwise direction whilst resisting deformation of the said strip (30) in a widthwise direction when the strip (30) is adhered along the length of the seam (10).

7. A method according to Claim 6 wherein the elastic fabric is a woven or knitted fabric containing elastomeric warp yarns and substantially non-extensible weft yarns so as to permit extension of the said fabric in a warpwise direction and resist extension of the said fabric in a weftwise direction when the strip (30) is adhered along the length of the seam (10).

8. A method according to any of Claims 1-7 wherein the said material exhibits substantially the same recoverable extension as the seam (10) in an elongate direction on the application of a tensile load.

9. A method according to any of Claims 1-8 wherein the said material is adhered along the length of the seam (10) using a hot melt adhesive.

10. A method according to Claim 9 wherein the hot melt adhesive is applied in the form of a continuous film (32).

11. A method of producing a reinforced seam according to Claim 7 wherein the elastic fabric is adhered along the length of the seam (10) using fusible yarns woven or knit into the elastic fabric.

12. A method according to any of Claims 1-11 wherein the said material is adhered under tension along at least part of the length of the seam (10).

13. A reinforced seam in a garment or other textile article comprising the edges of two more layers of textile fabric (12,14) secured together and a layer of substantially unidirectionally extensible elastic material adhered along the length of the seam (10) such that the said material straddles the seam (10) and the direction of extensibility of the said material is generally aligned with the elongate direction of the seam (10).

14. A reinforced seam according to Claim 13 wherein the edges of said two or more layers of textile material (12,14) are secured together by means of one or more of stitching, ultrasonic bonding and adhesive bonding.

15. A reinforced seam according to Claim 14 wherein said two or more layers of textile material (12,14) contain synthetic fibres and the edges of said two more layers of textile material (12,14) are secured together by means of ultrasonic bonding.

16. A reinforced seam according to any of Claims 13-15 wherein the said material comprises a strip (30) of an elastic fabric adhered along the length of the seam (10), the elastic fabric containing lengthwise extending elastomeric yarns incorporated so as to permit extension of the said strip (30) in a lengthwise direction whilst resisting deformation of the said strip (30) sin a widthwise direction.

17. A reinforced seam according to any of Claims 13-16 wherein the elastic fabric is a woven or knitted fabric containing elastomeric warp yarns and substantially non-extensible weft yarns so as to permit extension of the said fabric in a warpwise direction and resist extension of the said fabric in a weftwise direction.

18. A reinforced seam according to any of Claims 13-17 wherein the said material exhibits substantially the same recoverable extension as the seam (10) in an elongate direction on the application of a tensile load.

19. A reinforced seam according to any of Claims 13-18 wherein the said material is adhered along the length of the seam (10) using a hot melt adhesive.

20. A reinforced seam according to Claim 19 wherein the said material is adhered along the length of the seam (10) using a continuous film (32) of hot melt adhesive.

21. A reinforced seam according to Claim 17 the elastic fabric is adhered along the length of the seam (10) using fusible yarns woven or knit into the elastic fabric.

22. A reinforced seam according to any of Claims 13-21 wherein the said material is adhered under tension along at least part of the length of the seam (10) forming a ruched seam.

23. A garment comprising a reinforced seam as claimed in any of Claims 13-22.

24. A garment comprising a reinforced seam as claimed in Claim 23 wherein the garment is a shape-conforming garment or another textile article produced from a stretchable textile material.

25. A garment comprising a reinforced seam as claimed in Claim 24 wherein the garment is selected from football shirts, swimwear, body suits and control briefs.

## Patentansprüche

1. Verfahren zum Verstärken einer Naht (10) in einem Kleidungsstück oder einem anderen Textilartikel, den Schritt des Anhaftens einer Schicht von im Wesentlichen in eine Richtung dehnbarem, elastischem Material derart entlang der Länge der Naht (10) umfassend, dass das Material die Naht (10) überspannt und die Richtung der Dehnbarkeit des Materials im Allgemeinen an der Längsrichtung der Naht (10) ausgerichtet ist.

2. Verfahren zur Herstellung einer verstärkten Naht in einem Kleidungsstück oder einem anderen Textilartikel, folgende Schritte umfassend:
(a) Befestigen der Kanten von zwei oder mehr Schichten textilen Materials (12, 14) aneinander, um eine Naht (10) zu bilden, und
(b) Verstärken der Naht (10) gemäß dem in Anspruch 1 beanspruchten Verfahren.

3. Verfahren zur Herstellung einer verstärkten Naht nach Anspruch 2, ferner die Schritte des Entfernens überschüssigen textilen Materials (25) nach Bildung der Naht (10) und das Flachlegen der Naht (10) vor dem Anhaften des Materials entlang der Länge der Naht (10) umfassend.

4. Verfahren zur Herstellung einer verstärkten Naht nach Anspruch 2 oder 3, wobei die Kanten der zwei oder mehr Schichten textilen Materials (12, 14) mittels einer oder mehrerer der folgenden Techniken aneinander befestigt sind: Nähnähte, Ultraschallbindung und Klebstoffbindung.

5. Verfahren zur Herstellung einer verstärkten Naht nach Anspruch 3 und 4, wobei die zwei oder mehr Schichten textilen Materials (12, 14) synthetische Fasern enthalten und die Schritte des Befestigens der Kanten der zwei oder mehr Schichten textilen Materials (12, 14), um eine Naht zu bilden, und des Entfernens überschüssigen textilen Materials (25) gleichzeitig mit Hilfe von Ultraschall ausgeführt werden.

6. Verfahren nach einem der Ansprüche 1 bis 5, wobei das Material einen Streifen (30) einer elastischen Textilie umfasst, die längs verlaufende elastomere Garne enthält, die derart eingearbeitet sind, dass die Dehnung des Streifens (30) in Längsrichtung ermöglicht wird, während der Verformung des Streifens (30) in Breiterichtung standgehalten wird, wenn der Streifen (30) entlang der Länge der Naht (10) angehaftet wird.

7. Verfahren nach Anspruch 6, wobei die elastische Textilie ein Gewebe oder Gewirk ist, das elastomere Kettfäden und im Wesentlichen nicht dehnbare Schussfäden enthält, so dass die Dehnung der Textilie in Kettrichtung ermöglicht wird und der Dehnung der Textilie in Schussrichtung standgehalten wird, wenn der Streifen (30) entlang der Länge der Naht (10) angehaftet wird.

8. Verfahren nach einem der Ansprüche 1 bis 7, wobei das Material beim Anlegen einer Zuglast die gleiche rückführbare Dehnung in Längsrichtung wie die Naht (10) aufweist.

9. Verfahren nach einem der Ansprüche 1 bis 8, wobei das Material mit Hilfe eines heißschmelzenden Klebstoffes entlang der Länge der Naht (10) angehaftet wird.

10. Verfahren nach Anspruch 9, wobei der heißschmelzende Klebstoff in Form eines durchgängigen Films (32) aufgebracht wird.

11. Verfahren zur Herstellung einer verstärkten Naht nach Anspruch 7, wobei die elastische Textilie mit Hilfe schmelzbarer Fäden, die in die elastische Textilie eingewebt oder eingewirkt sind, entlang der Länge der Naht (10) angehaftet wird.

12. Verfahren nach einem der Ansprüche 1 bis 11, wobei das Material unter Spannung entlang mindestens eines Teils der Länge der Naht (10) angehaftet wird.

13. Verstärkte Naht in einem Kleidungsstück oder einem anderen Textilartikel, die umfasst, dass die Kanten von zwei oder mehr Schichten textilen Materials (12, 14) aneinander befestigt sind und eine Schicht von im Wesentlichen in eine Richtung dehnbarem, elastischem Material derart entlang der Länge der Naht (10) angehaftet ist, dass das Material die Naht (10) überspannt und die Richtung der Dehnbarkeit des Materials im Allgemeinen an der Längsrichtung der Naht (10) ausgerichtet ist.

14. Verstärkte Naht nach Anspruch 13, wobei die Kanten der zwei oder mehr Schichten textilen Materials (12, 14) mittels einer oder mehrerer der folgenden Techniken aneinander befestigt sind: Nähnähte, Ultraschallbindung und Klebstoffbindung.

15. Verstärkte Naht nach Anspruch 14, wobei die zwei oder mehr Schichten textilen Materials (12, 14) synthetische Fasern enthalten und die Kanten der zwei oder mehr Schichten textilen Materials (12, 14) mit Hilfe von Ultraschall aneinander befestigt sind.

16. Verstärkte Naht nach einem der Ansprüche 13 bis 15, wobei das Material einen Streifen (30) einer elastischen Textilie umfasst, der entlang der Länge der Naht (10) angehaftet wird, wobei die elastische Textilie längs verlaufende elastomere Garne enthält, die derart eingearbeitet sind, dass die Dehnung des Streifens (30) in Längsrichtung ermöglicht wird, während der Verformung des Streifens (30) in Breiterichtung standgehalten wird.

17. Verstärkte Naht nach einem der Ansprüche 13 bis 16, wobei die elastische Textilie ein Gewebe oder Gewirk ist, das elastomere Kettfäden und im Wesentlichen nicht dehnbare Schussfäden enthält, so dass die Dehnung der Textilie in Kettrichtung ermöglicht wird und der Dehnung der Textilie in Schussrichtung standgehalten wird.

18. Verstärkte Naht nach einem der Ansprüche 13 bis 17, wobei das Material beim Anlegen einer Zuglast die gleiche rückführbare Dehnung in Längsrichtung wie die Naht (10) aufweist.

19. Verstärkte Naht nach einem der Ansprüche 13 bis 18, wobei das Material mit Hilfe eines heißschmelzenden Klebstoffes entlang der Länge der Naht (10) angehaftet ist.

20. Verstärkte Naht nach Anspruch 19, wobei das Material mit Hilfe eines durchgängigen Films (32) aus heißschmelzendem Klebstoff aufgebracht ist.

21. Verstärkte Naht nach Anspruch 17, wobei die elastische Textilie mit Hilfe schmelzbarer Fäden, die in die elastische Textilie eingewebt oder eingewirkt sind, entlang der Länge der Naht (10) angehaftet ist.

22. Verstärkte Naht nach einem der Ansprüche 13 bis 21, wobei das Material unter Spannung entlang mindestens eines Teils der Länge der Naht (10) angehaftet ist und so eine gerüschte Naht bildet.

23. Kleidungsstück, eine verstärkte Naht nach einem der Ansprüche 13 bis 22 umfassend.

24. Kleidungsstück, eine verstärkte Naht umfassend, nach Anspruch 23, wobei das Kleidungsstück ein sich an eine Form anpassendes Kleidungsstück oder ein anderer, sich an eine Form anpassender Textilartikel ist, das/der aus einem dehnbaren textilen Material hergestellt ist.

25. Kleidungsstück, eine verstärkte Naht umfassend, nach Anspruch 24, wobei das Kleidungsstück aus Fußballtrikots, Badebekleidung, Ganzanzügen und Miederwaren ausgewählt ist.

## Revendications

1. Procédé de renforcement d'une couture (10) dans un vêtement ou un autre article textile comprenant l'étape d'adhésion d'une couche de matière élastique sensiblement unidirectionnellement extensible suivant la longueur de la couture (10) de telle sorte que ladite matière enjambe la couture (10) et la direction d'extensibilité de ladite matière est généralement alignée avec la direction allongée de la couture (10).

2. Procédé de production d'une couture renforcée dans un vêtement ou un autre article textile comprenant les étapes de :
(a) assujettissement des bords de deux couches ou plus de matière textile (12, 14) ensemble pour former une couture (10) ; et
(b) renforcement de la couture (10) selon le procédé revendiqué dans la revendication 1.

3. Procédé de production d'une couture renforcée selon la revendication 2, comprenant en outre les étapes d'enlèvement de la matière textile en excès (25) après formation de la couture (10) et mise de la couture (10) à plat avant adhérence de ladite matière suivant la longueur de la couture (10).

4. Procédé de production d'une couture renforcée selon la revendication 2 ou la revendication 3, dans lequel les bords desdites deux couches ou plus de matière textile (12, 14) sont assujettis ensemble au moyen d'un ou plusieurs éléments parmi le piquage, l'assemblage par ultrasons et l'assemblage par collage.

5. Procédé de production d'une couture renforcée selon les revendications 3 et 4, dans lequel lesdites deux couches ou plus de matière textile (12, 14) contiennent des fibres synthétiques et les étapes d'assujettissement des bords desdites deux couches ou plus de matière textile (12, 14) pour former une couture (10) et d'enlèvement de la matière textile en excès (25) sont effectuées simultanément en utilisant des ultrasons.

6. Procédé selon l'une quelconque des revendications 1 à 5, dans lequel ladite matière comprend une bande (30) d'étoffe élastique comprenant des fils élastomériques s'étendant dans le sens de la longueur incorporés de façon à permettre une extension de ladite bande (30) dans le sens de la longueur tout en résistant à la déformation de ladite bande (30) dans le sens de la largeur lorsque la bande (30) est mise à adhérer suivant la longueur de la couture (10).

7. Procédé selon la revendication 6, dans lequel l'étoffe élastique est une étoffe tissée ou tricotée contenant des fils de chaîne élastomériques et des fils de trame sensiblement non extensibles de façon à permettre l'extension de ladite étoffe dans le sens de chaîne et résister à l'extension de ladite étoffe dans le sens de trame lorsque la bande (30) est mise à adhérer suivant la longueur de la couture (10).

8. Procédé selon l'une quelconque des revendications 1 à 7, dans lequel ladite matière présente sensiblement la même extension récupérable que la couture (10) dans une direction allongée lors de l'application d'une charge de tension.

9. Procédé selon l'une quelconque des revendications 1 à 8, dans lequel ladite matière est mise à adhérer suivant la longueur de ladite couture (10) en utilisant un adhésif thermofusible.

10. Procédé selon la revendication 9, dans lequel l'adhésif thermofusible est appliqué sous la forme d'un film continu (32).

11. Procédé de production d'une couture renforcée selon la revendication 7, dans lequel l'étoffe élastique est mise à adhérer suivant la longueur de la couture (10) en utilisant des fils fusibles cousus ou tricotés dans l'étoffe élastique.

12. Procédé selon l'une quelconque des revendications 1 à 11, dans lequel ladite matière est mise à adhérer sous tension le long d'au moins une partie de la longueur de la couture (10).

13. Couture renforcée dans un vêtement ou un autre article textile comprenant les bords de deux couches ou plus d'étoffe textile (12, 14) assujettis ensemble et une couche de matière élastique sensiblement unidirectionnellement extensible mise à adhérer suivant la longueur de la couture (10) de telle sorte que ladite matière enjambe la couture (10) et la direction d'extensibilité de ladite matière est généralement alignée avec la direction allongée de la couture (10).

14. Couture renforcée selon la revendication 13, dans laquelle les bords desdites deux couches ou plus de matière textile (12, 14) sont assujettis ensemble au moyen d'un ou plusieurs éléments parmi le piquage, l'assemblage par ultrasons et l'assemblage par collage.

15. Couture renforcée selon la revendication 14, dans laquelle lesdites deux couches ou plus de matière textile (12, 14) contiennent des fibres synthétiques et les bords desdites deux couches ou plus de matière textile (12, 14) sont assujettis ensemble au moyen d'un assemblage par ultrasons.

16. Couture renforcée selon l'une quelconque des revendications 13 à 15, dans laquelle ladite matière comprend une bande (30) d'étoffe élastique mise à adhérer suivant la longueur de la couture (10), l'étoffe élastique comprenant des fils élastomériques s'étendant dans le sens de la longueur incorporés de façon à permettre une extension de ladite bande (30) dans le sens de la longueur tout en résistant à la déformation de ladite bande (30) dans le sens de la largeur.

17. Couture renforcée selon l'une quelconque des revendications 13 à 16, dans laquelle l'étoffe élastique est une étoffe tissée ou tricotée contenant des fils de chaîne élastomériques et des fils de trame sensiblement non extensibles de façon à permettre l'extension de ladite étoffe dans le sens de chaîne et résister à l'extension de ladite étoffe dans le sens de trame.

18. Couture renforcée selon l'une quelconque des revendications 13 à 17, dans laquelle ladite matière présente sensiblement la même extension récupérable que la couture (10) dans une direction allongée lors de l'application d'une charge de tension.

19. Couture renforcée selon l'une quelconque des revendications 13 à 18, dans laquelle ladite matière est mise à adhérer suivant la longueur de ladite couture (10) en utilisant un adhésif thermofusible.

20. Couture renforcée selon la revendication 19, dans laquelle ladite matière est mise à adhérer suivant la longueur de la couture (10) en utilisant un film continu (32) d'adhésif thermofusible.

21. Couture renforcée selon la revendication 17, dans laquelle l'étoffe élastique est mise à adhérer suivant la longueur de la couture (10) en utilisant des fils fusibles tissés ou tricotés dans l'étoffe élastique.

22. Couture renforcée selon l'une quelconque des revendications 13 à 21, dans laquelle ladite matière est mise à adhérer sous tension le long d'au moins une partie de la longueur de la couture (10) formant une couture ruchée.

23. Vêtement comprenant une couture renforcée selon l'une quelconque des revendications 13 à 22.

24. Vêtement comprenant une couture renforcée selon la revendication 23, dans lequel le vêtement est un vêtement se conformant aux formes ou un autre article textile produit à partir d'une matière textile étirable.

25. Vêtement comprenant une couture renforcée selon la revendication 24, dans lequel le vêtement est choisi parmi les maillots de football, les vêtements de bain, les maillots, et les slips ou culottes de type « gaine ».
